# EUROPEAN PATENT APPLICATION

(11) **EP 2 040 135 A2**
(43) Date of publication of application: **25.03.2009**
(21) Application number: 08164800.8
(22) Date of filing: 22.09.2008
(51) Int. Cl.: G05B 19/05

(54) **Automated validation of application code for an industrial control environment**

(30) Priority: 20.09.2007 US 858443
(71) Applicant: Rockwell Automation Technologies, Inc., Mayfield Heights, OH 44124 (US)
(72) Inventor: Bliss, Ronald E., Twinsburg, OH 44087 (US)
(74) Representative: Grünecker, Kinkeldey, Stockmair & Schwanhäusser Anwaltssozietät

(57) **Abstract**

Providing for automated electronic validation of industrial process code for an industrial control environment is described herein. By way of example, components of a system that facilitate such validation can include a monitoring component that tracks execution of code in an industrial control, and a storage component that receives a result of the execution of the code and stores the result in memory. Each line or logical element of code can be analyzed in this manner to determine a percentage of code that executes successfully and a percentage that does not, for instance. Additionally, results of physical outputs driven by the industrial code can be input into a system and correlated with the execution results. As a result, aspects of the subject disclosure can greatly reduce time and effort required to manually verify execution of industrial code.

## Description

### BACKGROUND

Industrial control environments can typically involve complex mechanical, electronic, electro-mechanical, and/or robotic machinery that perform various automated mechanical and/or electrical functions. Such machinery can include industrial motors, pumps, conveyors, escalators, drills, refrigeration systems, and so on, that can provide a particular physical output. Typically, an industrial environment utilizes one or more control devices to determine when to activate or deactivate such machinery, as well as an appropriate level of activation, for instance (e.g., an amount of current to supply a variable input motor). Additionally, the control devices are associated with logical program code that can determine an appropriate time, degree, manner, *etc.,* to operate such machinery based on various determinable circumstances (e.g., output of another device, reading of an optical sensor, electronic measurement such as current level in a device, movement or number of rotations of a device, and so on).

Typically industrial program code required to operate a single machine or control device can be very complicated, involving thousands or dozens of thousands of lines of code. Each line of code has to be validated however, to determine that it executes properly and provides a desired result (e.g., turning on a motor) based, for instance, on a particular set of circumstances (e.g., placing a 10 or greater kilogram object onto a conveyor belt sensor). Typical validation involves two stages, first determining that the code executes properly in an industrial control device, and second, determining whether a proper machine output is driven. For complicated code, especially in industries where mistakes are either very costly or dangerous, or both, simply validating proper execution can require months of time. Each logical element of code must be independently verified, both in proper execution and in properly driving an output, before the code can be put into a live environment. Additionally, one each logical element is verified individually, larger sections, and ultimately an entire program, must be verified as well. As a result, a great deal of time and expense can be required to properly validate code in sensitive industrial environments.

### SUMMARY

The following presents a simplified summary of the claimed subject matter in order to provide a basic understanding of some aspects described herein. This summary is not an extensive overview, and is not intended to identify key/critical elements or to delineate the scope of the claimed subject matter. Its sole purpose is to present some concepts in a simplified form as a prelude to the more detailed description that is presented later.

Aspects of the claimed subject matter provide for electronic validation of industrial process code in an industrial control environment. As an example, components of a system that provide such validation can include a monitoring component that tracks execution of code in an industrial control, and a storage component that receives a result of the execution of the code and stores the result in memory. Each line or logical element of code can be analyzed in this manner to determine a percentage of code that successfully executes and a percentage that does not. As a result, a great deal of time and effort spent in manually verifying execution of industrial code can be reduced or avoided.

Further aspects of the claimed subject matter facilitate verification of an output result of programmatic instructions at an industrial device. For example, a user input component can receive data related to physical operation of a device responsive to the industrial control. As a result, a correlating entity (a person, an optical sensor, and so on) can verify whether an instruction specified by the code is ultimately carried out by the device. In such a manner, validation of the execution of the code can be combined with verification of an intended electrical and/or mechanical response of a device.

According to additional aspects, the subject innovation provides for real-time display of an execution state of programmatic code and/or a device response in an industrial environment. The execution state, indicating a portion of code that has been executed on an industrial control and/or a portion that has failed to execute, can be provided to an external human machine interface (HMI) device. The HMI device can provide graphical and statistical feedback related to the execution state. For instance, the HMI device can depict a virtual representation of a control environment, and distinguish portions of the control environment associated with properly executed code from portions related to code that failed to execute properly. Alternatively, or in addition, an execution state of code can be provided to an external display of an industrial control. If a portion of code loaded onto the industrial control fails to execute, the display can indicate such failure for notification and troubleshooting purposes.

According to yet another aspect of the claimed subject matter, programmatic instructions for an HMI display device can be electronically monitored and validated. As an example, code responsible for accurately representing an execution state of other code (e.g., where such code is input and run on an industrial control) can require validation. Traditionally, such validation is done by manually printing and checking each line of code to determine whether it has been properly executed at the HMI display device. The subject innovation provides means for monitoring, storing and outputting the execution of such HMI display code to facilitate accurate and automated validation of such code, prior to utilizing it as a verification of other industrial code. As a result, programmatic instructions for an HMI device utilized to qualitatively and/or quantitatively measure an industrial process can be calibrated before utilization as a measurement tool.

According to further aspects, verification of physical device output can be received and stored in conjunction with code driving such output. A verification entity (e.g., a technician, quality control personnel, electronic sensor, electro-optical sensor, and so forth) can observe such physical device output and indicate whether the output was successful or unsuccessful. In addition, an identity of the verification entity can be stored along with output verification. Code that successfully drives an output can be flagged as ready for an industrial process; if subsequent changes occur to such code, the flag can be removed and additional verification required. As a result, the subject innovation combines automated validation of the execution of industrial code as well as receiving and storing an observation of physical output driven by such code.

To the accomplishment of the foregoing and related ends, certain illustrative aspects of the claimed subject matter are described herein in connection with the following description and the annexed drawings. These aspects are indicative, however, of but a few of the various ways in which the principles of the claimed subject matter can be employed and such subject matter is intended to include all such aspects and their equivalents. Other advantages and novel features will become apparent from the following detailed description of the invention when considered in conjunction with the drawings.

### BRIEF DESCRIPTION OF THE DRAWINGS

FIG. 1 depicts an example system that validates execution of code in an industrial environment.

FIG. 2 illustrates an example system for inputting and validating industrial code at an industrial controller in accordance with one or more aspects.

FIG. 3 depicts a sample system that can associate a verification of device output with a validation of execution of related code in an industrial environment.

FIG. 4 depicts an exemplary system that can generate statistical information related to an execution state of program code in an industrial environment.

FIG. 5 illustrates an exemplary system that provides a graphical representation of validation state of industrial code in accordance with additional aspects.

FIG. 6 depicts a sample system that can provide an indication of a failure to execute code, or a modification of validated code at an industrial control.

FIG. 7 depicts an example methodology for electronically validating program code in an industrial environment in accord with one or more aspects.

FIG. 8 illustrates an example methodology for validating and outputting an execution state of code on an industrial control device.

FIG. 9 depicts an exemplary methodology for associating device response data with code execution data in accordance with additional aspects.

FIG. 10 illustrates an example methodology for electronically validating programmatic code for an HMI display device in accordance with one or more aspects.

FIG. 11 depicts an example networking environment for remote communication of electronic devices in accordance with particular aspects.

FIG. 12 illustrates a sample operating environment for receipt, execution, and transfer of programmatic code and related information in accordance with additional aspects.

### DETAILED DESCRIPTION

The claimed subject matter is now described with reference to the drawings, wherein like reference numerals are used to refer to like elements throughout. In the following description, for purposes of explanation, numerous specific details are set forth in order to provide a thorough understanding of the claimed subject matter. It may be evident, however, that such matter can be practiced without these specific details. In other instances, well-known structures and devices are shown in block diagram form in order to facilitate describing the invention.

As used in this application, the terms "component" and "system" are intended to refer to a computer-related entity, either hardware, a combination of hardware and software, software, or software in execution. For example, a component may be, but is not limited to a process running on a processor, a processor, an object, an executable, a thread of execution, a program, and a computer. By way of illustration, both an application running on a server and the server can be a component. One or more components may reside within a process and/or thread of execution and a component may be localized on one computer and/or distributed between two or more computers. The word "exemplary" is used herein to mean serving as an example, instance, or illustration. Any aspect or design described herein as "exemplary" is not necessarily to be construed as preferred or advantageous over other aspects or designs.

Furthermore, aspects of the claimed subject matter may be implemented as a method, apparatus, or article of manufacture using standard programming and/or engineering techniques to produce software, firmware, hardware, or any combination thereof to control a computer to implement various aspects of the subject invention. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., card, stick, key drive, etc.). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope or spirit of what is described herein.

Moreover, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

As used herein, the terms to "infer" or "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In typical industrial control environments, programmatic instructions that drive the operation and output of machinery (e.g., a motor, pump, conveyor, refrigerator unit, or any suitable automated industrial device) are a critical portion of an automated environment. The instructions must be carefully checked to ensure that each machine is provided proper instructions for driving its own outputs, and properly coordinated with actions of other machines. Furthermore, programmatic code for a typical industrial control can include many thousands of logical elements (e.g., rungs on a ladder diagram, blocks in a functional block diagram (FBD), step in a sequential function chart (SFC), or line of structured text (ST) or of an instruction list), each logical element having a particular purpose for a machine(s) or its relationship(s) with other machines.

Accuracy of industrial program code is typically checked manually. For instance, code can be loaded onto an industrial control device or a control emulation device, and executed. A report detailing an execution status of each logical element (e.g., rung, block, step, line *etc.*) is typically printed out and manually read. A reader *(e.g.,* a human industrial control technologist, programmer, or the like) can then manually verify whether each logical element was properly executed. In addition to manually validating execution of the code, physical output (e.g., activation of a motor, pump, or similar device, operation of a conveyor, press, *etc.*) is generally verified by human observation and reporting as well.

Although manual verification of code can be effective in determining execution state of code, it can be extremely time consuming as well. For instance, complicated systems can require hundreds of thousands of lines of programmatic code. In addition, for highly sensitive industrial environments under heavy regulation (e.g., pharmaceutical applications for production of food, medicine, and the like, military and scientific applications such as rocket launch for space exploration and military testing, and the like) a great deal of precision can be required. As a result, a significant need exists for automated validation of the execution of industrial application code. In addition, a need exists for correlating automatically validated code with a result of a process. Because manual code validation can often take months in sensitive industries and for highly controlled processes, such automated validation can significantly decrease a cost associated with industrial processes, and decrease initialization and setup times required to prepare for actual production.

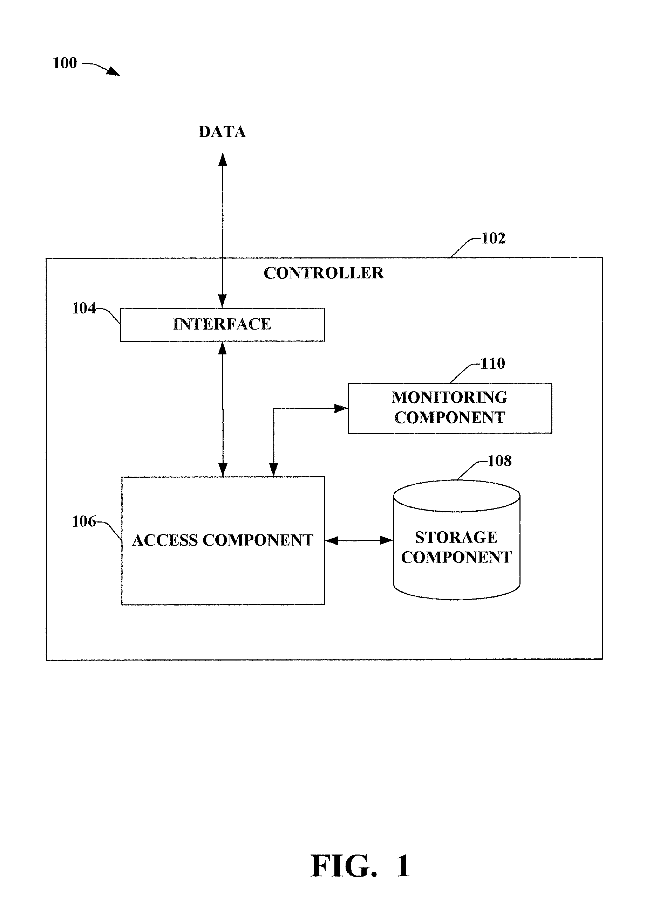

Referring to FIG. 1, a system 100 is depicted that provides electronic verification of execution of programmatic code in an industrial control environment. Controller 102 can be any suitable industrial control, such as a programmable logic controller (PLC), an industrial control emulation device, or like device. Controller 102 can output and receive data (*e.g.,* programmatic instructions, parameter values, error messages, *etc.*) by way of interface 104. Controller 102 can further include an access component 106 that can be associated with the interface 104 and can facilitate accessing data to/from storage component 108. For instance, access component 106 can receive data by way of the interface 104, wherein the data can include or be related to programmatic instructions that control operation of an industrial device (*e.g.,* pump, motor, conveyor, *etc.)* or group of devices, and the data can be stored at the storage component for execution at controller 102. Moreover, the access component 106 can provide programmatic access to the data space and to additional space allocated for validating execution of the programmatic instructions, as discussed *infra.*

The access component 106 can further be associated with a monitoring component 110 that can track execution of a logical element of programmatic code input onto controller 102 (*e.g.,* an industrial control or control emulation device). For instance, monitoring component 110 can include a code coverage tool (not depicted) that audits each logical element of code loaded onto controller 102. In addition, the coverage tool can determine whether an error occurs during execution of such logical elements, or, for instance, whether each logical element is actually presented to a processor (not depicted) of controller 102 for execution. Consequently, proper execution of a logical element, as well as improper execution or even failure to receive, read, access, *etc.,* the logical element can be tracked by monitoring component 110. In addition to the foregoing, it should be appreciated that monitoring component 110 can be proximate controller 102 (e.g., implemented within firmware of controller 102) external to controller 102 *(e.g.,* as part of a workstation having a remote communication interface with controller 102), or a combination of both or of the like.

In addition to the foregoing, system 100 can also record information related to execution of programmatic code at controller 102. For instance, storage component 108 can allocate memory to the programmatic code (*e.g.,* upon loading the code, a portion thereof, or data related to such code or its' execution), and can receive a result of the execution of a logical element of such code from monitoring component 110, and store the result in a at least a portion of the memory allocated thereto. As a particular example, storage component 108 can allocate a bit for each logical element (*e.g.,* rung of a LD, block of a FBD, step of a SFC, line of ST or instruction list, or the like) of industrial code. A value can be stored in each bit depending on a result determined by the monitoring component 110. More particularly, if controller 102 properly executes the logical element, monitoring component 110 can indicate such to storage component 108, and a value indicating success (*e.g.,* a 0 value) can be stored in the bit allocated to the logical element. In contrast, if monitoring component 110 determines that controller 102 fails to properly execute the logical element and provides this result to the storage component 108, a value indicating failure (*e.g.,* a 1 value) can be stored in the bit allocated by storage component 108 instead.

In addition to allocating a bit to store data related to execution of a logical element, storage component 108 can allocate a plurality of bits for each logical element to indicate a number of times that such elements have or have not executed properly. The plurality of bits can be updated to indicate a number of times that a logical element is successfully executed, and/or a number of times execution of the logical element has been attempted or should have been attempted. For instance, monitoring component 110 can determine when each logical element of industrial code is presented for execution at controller 102. Upon such determination, monitoring component 110 can update storage component 108, which can update the counter to track a baseline execution number related to the logical element. Additionally, monitoring component 110 can determine whether the code was successfully executed or not, and provide this determination as well to storage component 108. As a result, storage component can also update the counter to indicate how many times a logical element is successfully executed. Consequently, statistics related to a number of times logical elements of code are presented, read, accessed *etc.,* by controller 102 versus a number of times such elements are successfully executed can be identified and stored by system 100.

It should be appreciated that storage component 108 can include, but is not limited to, volatile memory and nonvolatile memory. By way of illustration, and not limitation, nonvolatile memory can include read only memory (ROM), programmable ROM (PROM), electrically programmable ROM (EPROM), electrically erasable PROM (EEPROM), or flash memory. Furthermore, volatile memory can include random access memory (RAM), which acts as external cache memory. Moreover, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

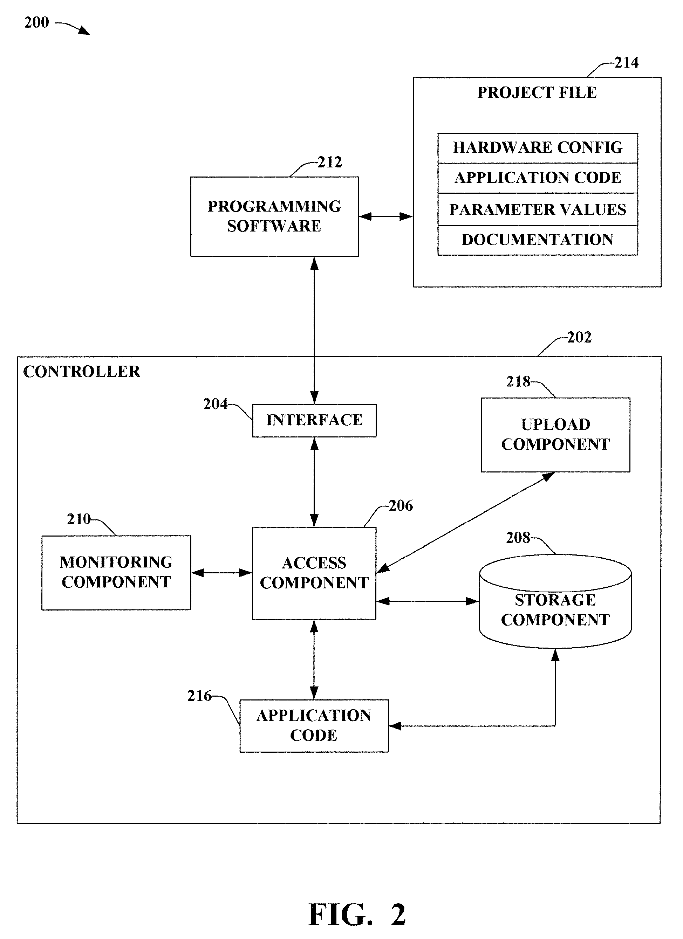

Referring now to FIG. 2, an illustration of an example system is provided that can facilitate input and validation of industrial code at an industrial controller in accordance with one or more aspects. The system 200 can include a controller 202 (e.g., industrial control, PLC, programmable automation controller [PAC], distributed control system [DCS] controller, control emulation device, *etc.*) that can include an interface 204 that can facilitate sending data from the controller 202 to another device or receiving data from another device to the controller 202. The controller 202 can further include an access component 206 that can facilitate access of data to/from one or more storage components (208) included in the controller 202. The storage components (208) can store hardware configurations, programmatic code that directs operation of the controller 202, parameter values related to execution of such code and to devices managed by controller 202, and the like.

System 200 can further include a project file 214 that can include, but is not limited to, a hardware configuration, application code, parameter values, documentation, etc. Parameters, code, and data can all originate *via* the project file 210 that can be loaded into the controller 202. Alternatively, or in addition, portions of the parameters, code, and/or data can be updated manually, for instance at run time, or *via* an external application (not depicted). It is to be appreciated that programming software 212 can utilize at least one of the project file 210 and/or the controller 202. Furthermore, at runtime, the code in the controller 202 can utilize the access component 206 to read the parameters, data, other portions of code, *etc.,* in the storage component 208. In other words, the access component 106 can provide programmatic access to the storage component 208 dynamically during runtime.

Application code 216 within the controller 202 can facilitate the execution of instruction and can utilize data to base at least one of a control decision, tracking execution of a logical element of code, be read by an HMI (not shown) for use on displays, etc. The controller 202 can further include an upload component 218 that can facilitate the extraction of data values in the storage component 208, and the code from the controller 202 to re-generate the project file 210 in the programming software 212. Further, the upload component 218 can facilitate extracting program instructions that are compiled and loaded into the memory (*e.g.,* storage component 208 or additional memory, not depicted) of the controller 202, and upload or offload that information back up to the programming software 212 so that the actual source code associated with the program instructions can be re-generated.

In addition to the foregoing, programmatic software 212 can facilitate interfacing between controller 202 and project file 214 to load code and related data onto the controller 202. Execution of the code can be electronically tracked by monitoring component 210 to provide automated validation of the execution. For example, the monitoring component 210 can receive an error state from application code 216 related to execution of the code on controller 202. If an error related to a logical element is indicated, monitoring component 210 can provide such information to storage component 208. Storage component 208 can allocate a bit and/or counter to each logical element, and store a value indicating failure if such error related to the logical element is determined. Consequently, system 200 can provide automated validation of code executed at a controller 202, which can mitigate or obsolete manual validation of such code.

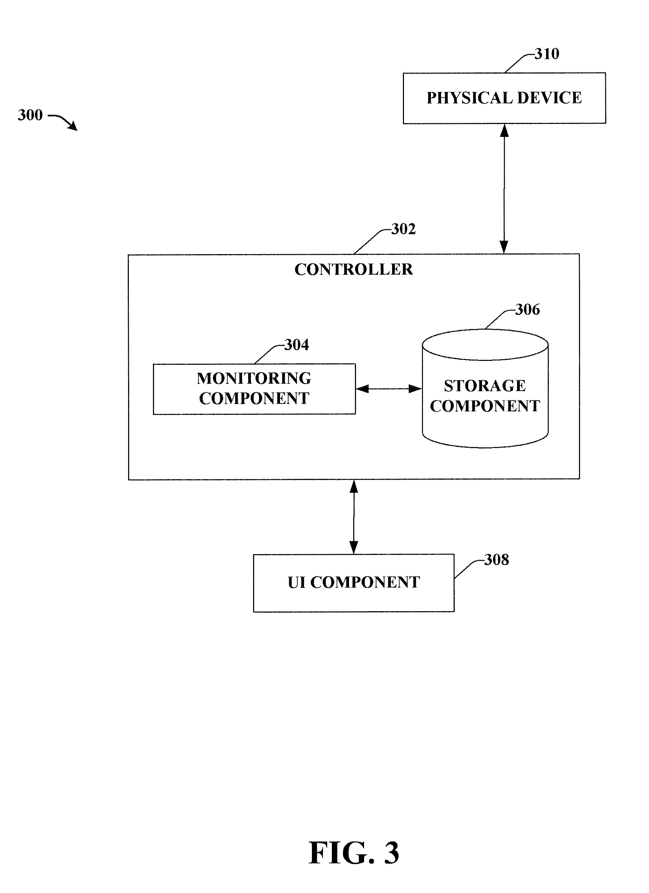

FIG. 3 depicts a sample system 300 that can associate a verification of device output with a validation of execution of related code in an industrial environment. System 300 can include a controller 302 that further includes a monitoring component 304, and data storage component 306. The controller 302 can include an industrial control device, a PLC, a control emulation device, or the like. In addition, the monitoring component can track execution of programmatic code at the controller 302 and determine whether a portion thereof (*e.g.,* a logical element, as described herein) fails to properly execute. Furthermore, a failure to execute and/or proper execution of the programmatic code can be stored at storage component 306 for reference by the controller 302, or an external device (*e.g.,* an HMI device that displays an execution state of the code).

In addition to the foregoing, system 300 can include a user interface (UI) component 308 that can receive data related to validation of an output of the industrial control or the control emulation device and can store a validation result in a portion of the storage component 306 allocated to related industrial code. For instance, an industrial control (302) may be responsible for managing operation of a physical device 310 such as a conveyor system. Additionally, programmatic code loaded onto the industrial control (302) can be directed at operating the conveyor system (310) to move a load (*e.g.,* a box or series of boxes, or virtually any suitable object that can be moved on a conveyor belt) across a factory floor. Valid execution of the programmatic code at the industrial control can be distinct from whether the physical response (*e.g.,* movement of the load across the factory floor) properly occurs. For instance, the code can be executed on a control emulation device (302) designed to test execution of the code without driving a physical device 310. The emulation device (302) reads the code and outputs an execution result if the code can be properly read and executed by the control device (302), for instance (*e.g.,* if the code is properly formatted, structured, and logically accurate, or the like).
However, such emulation device need not (and typically does not) drive a physical device (*e.g.,* conveyor) which the code is intended for. For highly sensitive and/or expensive physical processes, emulation can be an important tool to determine whether code will run properly, before testing it in on a physical device and/or in a production environment.

To continue the foregoing example, code can be loaded onto an industrial control (302) that can drive a physical output (*e.g.,* turn a conveyor on and off). Validation of the execution of the code can be performed contemporaneously with operation of a conveyor 310. A validation entity (not depicted) can observe the conveyor and determine if, indeed, a load is properly moved across the factory floor as intended by the programmatic code. The validation entity (e.g., human observer, electronic and/or optical sensor or vision system, and so forth) can provide data related to physical device 310 output. For instance, whether the load was properly moved can be indicated. In addition, identification of the validation entity (*e.g.,* username and password, ID number, security certificate, or the like) can be provided. Furthermore, a date and time of the data entry can be recorded by UI component 308, and associated with such data. Data received by UI component 308 can be relayed to storage component 306 for recordation. Additionally, storage component 306 can associated the validation data with verification of code execution. As a result, system 300 can facilitate validation of execution of programmatic code, as well as verification of an intended physical result associated with a process driven by that code.

It should be appreciated that a validation entity, as described with respect to system 300, can include a person or an observation device. For instance, a person can observe a physical output and enter the results of such observation into UI component 308 for storage and association with related programmatic code (*e.g.,* code that drives such output) at storage component 306. Such a person can enter a username, password, or other suitable identification and/or quality control information related to verification of execution of code and/or validation of physical output. The identification information can be stored and associated with the programmatic code or at least a portion thereof for later reference (*e.g.,* to indicate that a qualified entity verified the physical output).

In addition to the above, or as an alternative, an observation device (*e.g.,* electronic eye, robotic mechanism, electro-optical vision system, or the like) can observe the physical output and update UI component 308 with the results of the observation. As above, such results can be stored and associated with relevant code. Further, validation information (*e.g.,* ID number, time and date, *etc.*) associated with the observation device can also be input at UI component 308 and recorded at storage component 306. As described, system 300 can facilitate automated validation of execution of industrial code, as well as facilitate associating that code with electronic or manual verification of physical output. Consequently, system 300 can substantially reduce overhead and time required for such validation and verification of program code in an industrial environment.

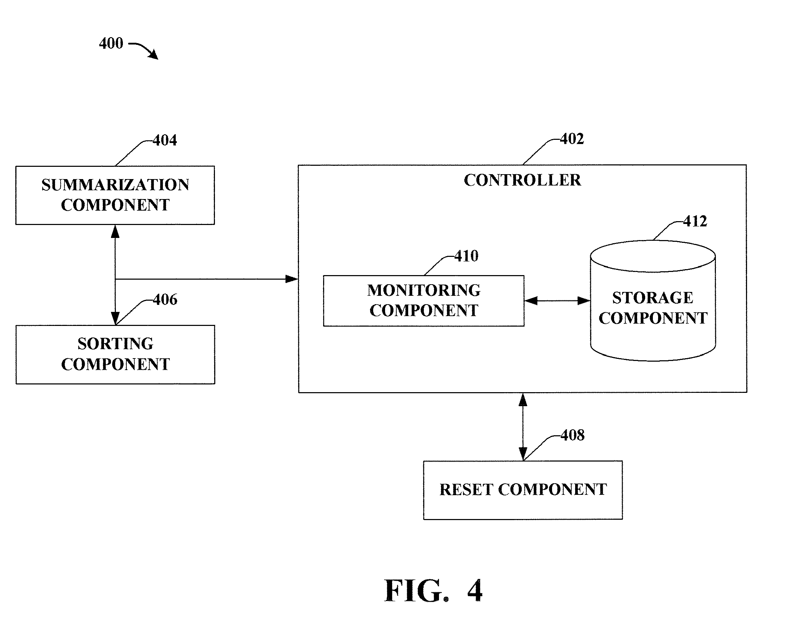

FIG. 4 depicts an exemplary system 400 that can generate statistical information related to an execution state of program code in an industrial environment. Controller 402 can be any suitable industrial control or control emulation device described herein or known in the art. Such controller 402 can monitor execution of code and store a result related to that execution. For example, a monitoring component 410 can track execution of code, input to controller 402, to determine whether portions or all of such code is received and executed. If a portion of code is not received (*e.g.,* not read in by the controller, due to a flaw in logical flow or the like) or is not executed properly, the monitoring component 410 can store this result at storage component 412. Additionally, memory allocated to the portion of the code that is not received or not executed properly, can indicate such result. System 400 therefore, can automatically monitor and store data related to execution of industrial code to greatly reduce manual efforts to validate such code.

In addition, system 400 can generate statistics related to execution of industrial code. Such code can include many thousands of lines, logical elements, or the like, and it may be convenient to identify, for instance, a percentage of the code that fails to properly execute and to identify and provide the particular lines, logical elements, *etc.,* that fail. To accomplish this result, system 400 can include at least a summarization component 404, a sorting component 406, and a reset component 408. Further, although the summarization component 404, sorting component 406 and reset component 408 are depicted in FIG. 4 as having a particular relationship with the controller 402 (*e.g.,* included within the controller, or separate from the controller), it should be appreciated that other suitable component relationships can exist. For instance, any of such components (404, 406, 408) can be included within controller 402, can be exterior to the controller 402, or a combination of both.

Summarization component 404 can receive results of execution of a plurality of logical elements of programmatic code, and can identify and generate statistics related to a percentage of the plurality of logical elements that executed properly and/or did not execute properly. For instance, summarization component 404 can access storage component 412 (*e.g., via* interface 104 and/or access component 106, *supra,* or the like) and obtain data stored therein related at least to proper execution of the programmatic code. More specifically, a number of logical elements within the code can be obtained, as well as a number of elements received for processing, a number of elements properly executed, and a number of elements improperly executed. Summarization component 404 can then generate and provide various statistics related to complete or incomplete execution of the code. For instance, a percentage of properly executed logical elements can be generated. Such percentage can indicate to a programmer how successful the code is at a particular point. Additionally, a percentage of elements received for processing can be generated and provided. Such a percentage of received elements can indicate whether portions of the code are skipped, by flaws in flow of logic for instance. In addition, any suitable statistic related to execution of portions of code in an industrial environment, as known in the art or made known to one of skill in the art by way of the examples articulated herein, are incorporated into the summarization component 404.

System 400 can further include a sorting component 406 that filters the identified logical elements that executed properly or did not execute properly and provides one or more of the logical elements based on a search criteria. For instance, sorting component can receive various suitable search criteria including logical elements that failed to execute and/or be received for processing, logical elements that successfully executed, or the like. The sorting component 406 can then filter data recorded at storage component 412 to identify logical elements meeting the search criteria (*e.g.,* that failed to execute, *etc.*) Sorting component 406 can then compile and provide a list of logical elements matching the search criteria to an output device, such as an HMI device (not depicted). Such a list can be provided in addition to statistics generated by summarization component 404, for instance. As a result, system 400 can provide a summarization page related to execution of code, that indicates a number of successful and unsuccessful elements of such code, as well as list of such successful and/or unsuccessful elements, or the like.

In addition to the foregoing, system 400 can further provide for resetting various recorded data and/or statistical information generated by summarization component 404, sorting component 406, and/or storage component 412. More specifically, a reset component 408 can modify or erase a stored result of the execution of a logical element of programmatic code. For instance, if a bit allocated to a logical element contains a stored value related to a prior execution (or, *e.g.,* attempted execution) of such element, reset component can erase and/or modify such value. Alternatively, or in addition, a plurality of bits creating an execution counter (*e.g.,* storing a number of successful executions versus a number of attempted executions) can be reset, modified, *etc.,* as required by reset component 408. Consequently, reset component 408 can facilitate re-testing of one or more logical elements to determine whether a change has been effective, for instance.

According to a particular, non-limiting example, reset component 408 can erase and/or modify a verification flag that indicates whether a portion of code has successfully driven an output *(e.g.,* at physical device 310 of FIG. 3, *supra).* For instance, the verification flag can be attached to a portion of code if an observer indicates that a device (e.g., 310) has properly driven an output according to instructions provided by the portion of code. If, however, the portion of code is subsequently altered, or a reviewing entity indicates that an aspect of the code is incorrect, or the like, the verification flag can be reset, indicating that the portion of code is not or should not be associated with a verified physical device output and/or proper code. An observer (*e.g.,* technician, electro-optical vision system, and so on) can observe a result of a physical device driven by the altered code and indicate whether a subsequent output is successful or not, as described herein. It should be appreciated that reset component 408 can modify or erase all verification flags pertaining to all portions and/or elements of executed code, or selective verification flags pertaining to a particular portion(s) and/or element(s) of the executed code.

In general, system 400 can provide troubleshooting tools to help a programmer, technician, verification entity, or the like, determine a state of execution of programmatic code and/or logical elements thereof Such tools, including execution statistics, and filtering and reset functions, can be powerful tools for optimizing a troubleshooting process. As a result system 400 can further reduce an amount of time required to validate industrial code and prepare it for operation in accordance with one or more aspects of the subject innovation.

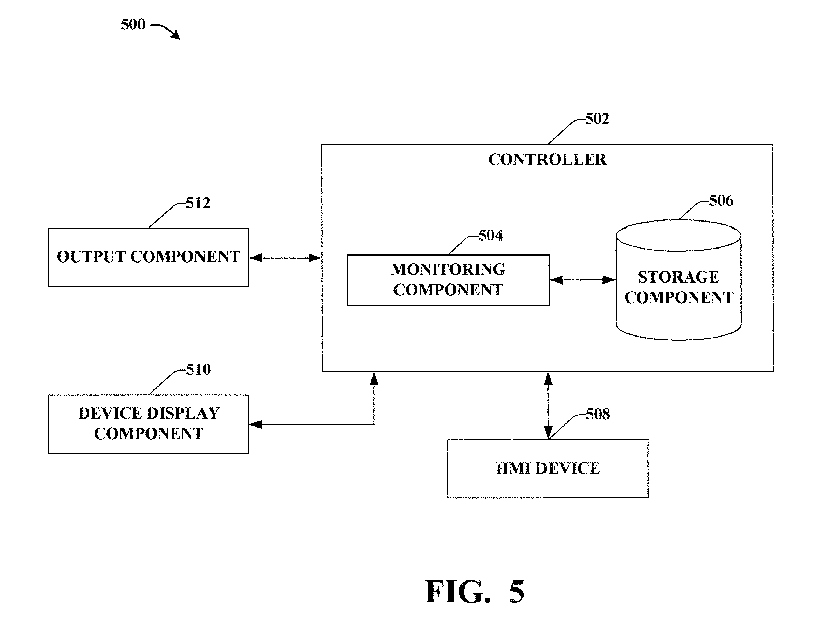

FIG. 5 illustrates an exemplary system 500 that provides a graphical representation of validation state of industrial code in accordance with additional aspects. More specifically, system 500 can provide a real-time graphical indication of automated code validation for an industrial environment. Code validation, performed at a controller 502 by a monitoring component 504 and storage component 506 as described herein, can be provided to an HMI device 508 and/or a device display component 510 at periodic intervals (*e.g.,* upon completion of execution of a portion of code, upon updating a bit and/or counter, or the like, allocated to such code or a portion thereof, based upon a certain time interval, an external trigger, such as a push of a button on a device, or activation by an external entity, or the like). For instance, each time a segment of code (*e.g.,* rung of a ladder diagram, line of structured text, and so on) can be read by an industrial control or control emulation device, a result associated with that line can be generated and provided to the HMI device 508. The result can specify, for instance, at least whether the segment is successfully executed or not.

In addition to the foregoing, system 500 can provide information related to proper execution of portions of each segment of code, to facilitate segment debugging. Sub-segments of a segment of code, such as a single logical element or group of logical elements of a ladder diagram rung, can be evaluated in addition to the segment itself For example, a rung in a ladder diagram that drives a single output of a device can include 3 sub-segments, a logical 'open/close' operation determining whether a detector has been activated, a logical 'open/close' operation determining whether a fault has been identified for the device, and a logical 'and' operation determining whether both of the prior operations are in a 'close' position, and if so, engaging the output of the drive. Upon reading in code comprising this segment and its sub-segments, controller 502 can not only determine whether the rung is executed properly, but whether each logical subelement is also executed properly. For instance, if code for the logical 'open/close' operation of the detector executes properly, but code for the remaining two sub-segments does not execute properly, controller 502 can provide this information to HMI device 508 and/or device display component 510. In such a manner, controller 502 can provide feedback related to portions of a segment of code, down to each logical element thereof for instance, to facilitate troubleshooting errors in execution.

According to one or more aspects of the subject disclosure, device display component 510 can provides a graphical and/or auditory indication that one or more logical elements failed to execute. For instance, device display component 510 can be an LED indicator, backlit display, or the like, of an industrial control or emulation control device. Alternatively, or in addition, device display component 510 can include an indicator on a personal computer, a personal digital assistant, a cell phone, or a server, or a combination thereof, communicatively coupled with the industrial control or the emulation control device. Device display component 510 can provide a quick indication that an execution failure has occurred. Such failure can be during testing of industrial code, such as determining whether all segments of code properly execute, or determining whether a device provides an expected output, or the like. In addition, the device display component 510 can provide an indication of improper validation. For instance, if industrial code has not fully executed properly, improper validation can be indicated. Further, if code has fully executed properly or if a device has produced an expected output, but a technician has not approved of such execution/output, an improper validation can be indicated. As a further example, if code or output is properly approved of, but is subsequently changed without approval of the change, an improper validation can be indicated. As described, device display component 510 can give a quick visual and/or auditory indication of a level of confidence appropriate for industrial code.

According to still other aspects, system 500 can provide a comprehensive steady state visual display of execution of code. An HMI device 508 can be included within system 500 that receives the stored result and generates a graphical indication of the result of the execution of the logical element. The graphical indication can include color, animation, auditory alerts, and the like, to distinguish verified portions and/or elements of code from unverified portions/elements of such code (*e.g.,* a rung on a ladder diagram, a logical elements of one or more rungs, and so forth). The display can include a graphical representation of logical elements of each line of code in a format representative of structure for that code (*e.g.,* in the form of a ladder diagram configuration, a structured text or instruction list configuration, a functional block diagram configuration, or a sequential function chart configuration, or combinations thereof or of like display configurations). Such graphical representations can be utilized to summarize execution results for each segment (or, *e.g.,* sub-segment) of code read into a controller (502) or a steady state description of execution state of each segment and sub-segments thereof, or both.

HMI device 508 can also distinguish between properly executed and improperly executed segments and/or sub-segments by way of typical graphical techniques utilized for depicting industrial processes. Successfully completed lines of code can be highlighted in a first color, whereas incomplete segments can be highlighted in a different color, red for instance. Furthermore, improperly executed code can be represented with a prominent effect, such as blinking in and out, displayed in conjunction with an auditory failure warning, and so on. In a manner as described, HMI device 508 can provide a comprehensive visual indication of concurrent execution state of industrial code.

In accordance with particular aspects of the subject disclosure, HMI device 508 can provide not only a steady-state display associated with execution of a plurality of logical elements, but also can indicate a number of logical elements that have executed properly, and a number of the logical elements that have failed to execute properly. Furthermore, HMI device 508 can identify a line, rung, block, or step number, or combination thereof or of like segments of industrial code, that have executed or that have failed to execute. Statistics can also be provided, for example, summarizing this execution information. As a result, system 500 can give a comprehensive graphical and/or statistical overview of execution of industrial code in accord with one or more aspects described herein.

In addition to the foregoing, system 500 can include an output component 512 that generates a report of a result of execution of logical elements of the industrial code. The report can provide a hard-copy of execution status of each segment and/or sub-segment of industrial code loaded onto controller 502, as described herein. The report can also include summary statistics indicating a number of segments that have executed properly, improperly, and the like. In general, output component can provide an alternative or additional mechanism, as compared with HMI display device 508 or device display component 510, to review execution and validation results of industrial code.

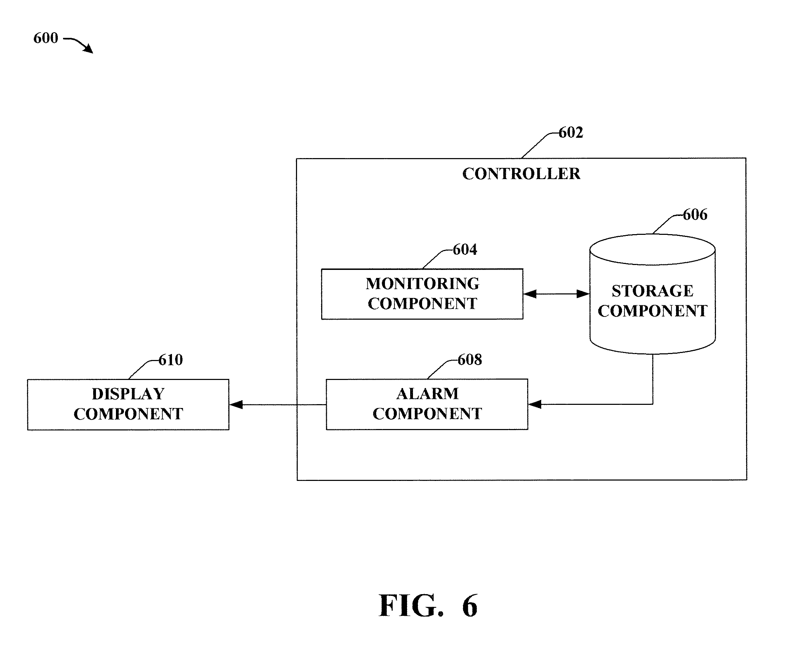

FIG. 6 depicts a sample system that can provide an indication of a failure to execute code, or a modification of validated code at an industrial control. Controller 602 can include monitoring component 604 and storage component 606. Such components can monitor execution of industrial code and store execution results for each segment and/or sub-segment thereof, as described herein. As a result system 600 can provide for at least monitoring and storing information related to proper execution of industrial code.

In accordance with additional aspects, storage component 606 can allocate a validation bit to each segment and/or sub-segment of code. The validation bit can be allocated to storing a validation status of each segment/sub-segment. Validation status can be received at an HMI device (not depicted) connected with controller 602, for instance, and can specify that a particular segment or sub-segment thereof has been properly executed and reviewed by a technician. Upon receipt of such validation status, the validation bit can be flagged as received; otherwise, the validation bit is flagged as not received. As a result, storage component 606 can provide an indication of whether a portion of code has been successfully executed and/or reviewed by a technician.

In accordance with still other aspects, an alarm component 608 can provide a result of the execution of a logical element of code to a display component 610 if the logical element fails to execute. For example, if the logical element is properly executed and/or reviewed by a technician, a validation bit can be flagged to indicate such a result. Alarm component 608 can access this result and provide an indication thereof to display component 610 (*e.g.,* which can include an LED indicator on a device, flat panel display, and so on). Display component 610 can graphically indicate whether one or more lines of code are not validated, thereby alerting an external entity to the status of the industrial code.

Alternatively, or in addition, alarm component 608 can provide an indication that a successfully executed and/or validated logical element has been changed after the execution/validation. For instance, alarm component 608 can periodically read validation bits, or receive an indication of a change in status of a validation bit, or both, stored at storage component 606. Furthermore, alarm component 608 can reference a validation bit and check to see whether such bit is flagged as validated or not validated for one or more segments of industrial code. If a bit is found to be not validated, as described herein, alarm component 608 can indicate such a result to display component 610. Display component can then indicate that a change in validation state has occurred, and provide reference numbers identifying the particular segment(s) that has changed. Consequently, a steady state condition of code validation and changes thereof can be provided and indicated by system 600.

The aforementioned systems have been described with respect to interaction between several components. It should be appreciated that such systems and components can include those components or sub-components specified therein, some of the specified components or sub-components, and/or additional components. For example, a system could include interface 104, access component 106, monitoring component 110, storage component 108, and summarization component 404, or a different combination of these and other components. Sub-components could also be implemented as components communicatively coupled to other components rather than included within parent components. Additionally, it should be noted that one or more components may be combined into a single component providing aggregate functionality. For instance, summarization component 404 can include sorting component 406, or *vice* versa, to facilitate sorting code execution output information and providing related summarization statistics by way of a single component. The components may also interact with one or more other components not specifically described herein but known by those of skill in the art.

Furthermore, as will be appreciated, various portions of the disclosed systems above and methods below may include or consist of artificial intelligence or knowledge or rule based components, sub-components, processes, means, methodologies, or mechanisms (*e.g.,* support vector machines, neural networks, expert systems, Bayesian belief networks, fuzzy logic, data fusion engines, classifiers...). Such components, *inter alia,* and in addition to that already described herein, can automate certain mechanisms or processes performed thereby to make portions of the systems and methods more adaptive as well as efficient and intelligent.

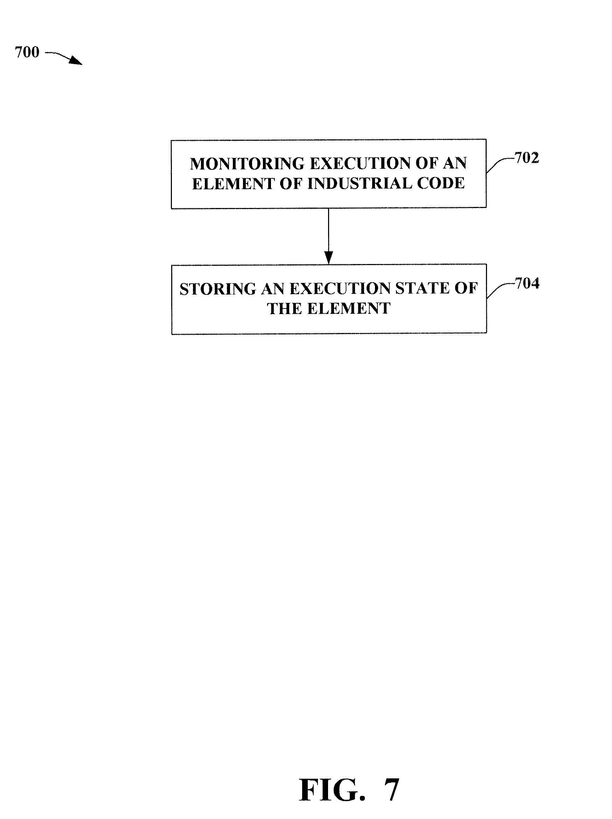

In view of the exemplary systems described *supra,* methodologies that may be implemented in accordance with the disclosed subject matter will be better appreciated with reference to the flow charts of FIGs. 7-10. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described hereinafter. Additionally, it should be further appreciated that the methodologies disclosed hereinafter and throughout this specification are capable of being stored on an article of manufacture to facilitate transporting and transferring such methodologies to computers. The term article of manufacture, as used, is intended to encompass a computer program accessible from any computer-readable device, carrier, or media.

Referring now to FIG. 7, a sample flowchart 700 is depicted for electronically validating program code in an industrial environment in accord with one or more aspects. Method 700, at 702, can monitor execution of a logical element of industrial code. The logical element of industrial code can be one or more portions of code (*e.g,* a rung of a LD, block of a FBD, step of a SFC, line of ST, or the like or a subset or combination thereof) input into an industrial control or control emulation device, for instance. Particularly, an execution state, indicating whether or not the element has been properly executed at the control/emulation device can be determined. For example, the determination can be made at the control/emulation device in conjunction with reading and/or executing, or failing to execute, the element of industrial code, or at a device communicatively coupled with the control/emulation device (*e.g.,* by way of a wired or wireless network, an ad-hoc network between two or more devices, a cellular network, mobile network, and so on). As described, monitoring can be utilized to provide a steady-state feedback as to the execution state of industrial code, by the control or emulation device attempting to execute the code, for instance.

In addition to the foregoing method 700, at 704, can store an execution state of the logical element in memory. The execution state can represent whether the logical element, or portion thereof, was successfully executed at an industrial controller or emulation device, as described herein. It should be appreciated that method 700 can provide for monitoring and storing of multiple logical elements of industrial code, contemporaneous with or subsequent to reading such logical elements and/or attempting to execute such logical elements. As a result, real-time or near real-time execution feedback can be automatically provided during execution or simulation of the code. Particularly, method 700 can substantially reduce an amount of time required to validate industrial code as compared with conventional techniques requiring each logical element to be executed, printed and verified manually.

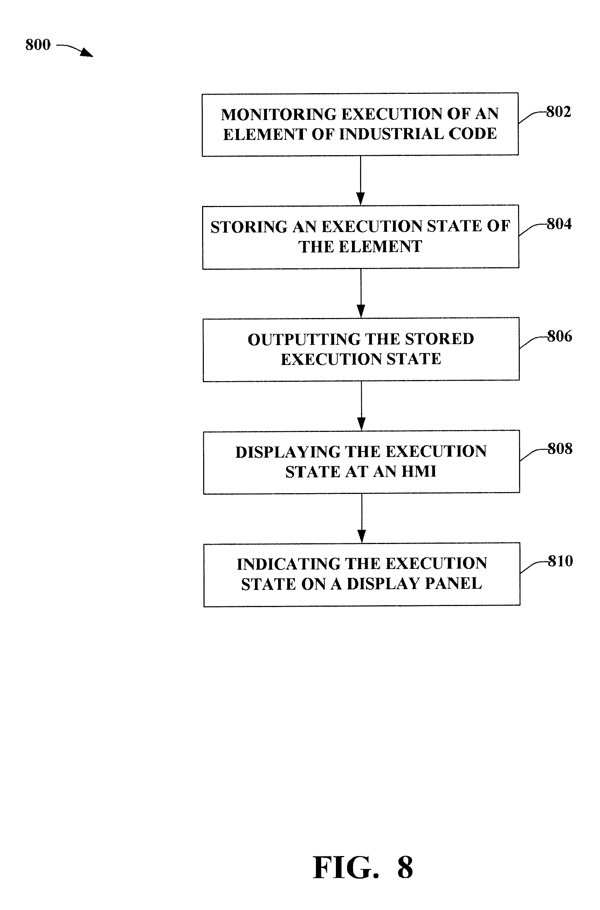

Referring now to FIG. 8, an example flowchart 800 is depicted for validating and outputting an execution state of code on an industrial control device. Method 800, at 802, can monitor execution of an element of industrial code, as described herein. At 804, an execution state of the element can be stored. For instance, a bit or counter can be allocated in memory to store information related to the execution state. More particularly, the bit can be set at one level to indicate proper execution of the logical element, or at a second level to indicate improper execution, or the like, based on the monitoring at reference number 802. Alternatively, or in addition, a counter can store a number of times that the logical element has been executed properly and/or improperly based on this monitoring. In such a manner, method 800 can keep track of the execution state of industrial code, and as described below, provide that execution state to an external entity.

At 806, the stored execution state can be output from a storage device.
For example, information stored in a bit or counter allocated to the execution state (*e.g.,* that records proper/improper execution and/or a number of times thereof) can be provided to an external device or component, for instance. At 808, the execution state, output at reference number 806, can be displayed at an HMI device and/or a programming workstation. The HMI/workstation device can provide a graphical (*e.g.,* visual, pictorial, *etc.*) and optionally an auditory representation of execution state of industrial code. The representation of the execution state can provide real-time feedback as to whether such code is constructed properly. For instance, as a logical element of industrial code is processed for execution, and the execution state determined, a result of such determination can be provided and represented at the HMI device. Identification of code that fails to execute, as well as its relationship to other code can quickly be determined, therefore, by viewing the graphical representation provide at the HMI device.

Method 800, at 810, can also provide the execution state of the logical element at a display panel of a device (*e.g.,* LED display on an industrial control/emulation device, a laptop, PDA, computer, cell phone, and so on). Such indication can provide a quick visual representation of the execution state of industrial code. Additionally, a change in validation state can be indicated at the display panel if an element of industrial code is altered, for instance, after validation has occurred. Consequently, an indication of contemporaneous validation state of logical elements of industrial code can be provided by method 800.

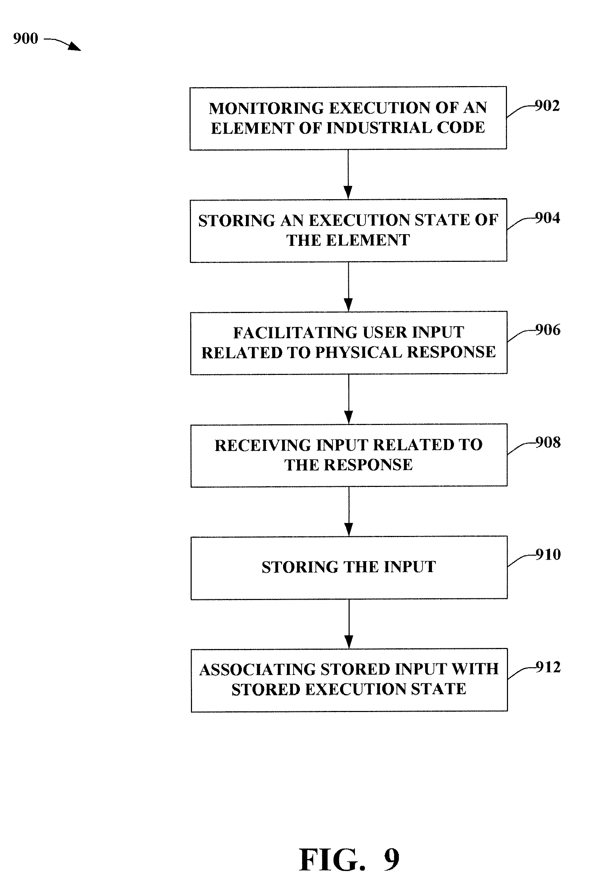

Referring now to FIG. 9, a flowchart 900 is illustrated for associating device response data with code execution data in accordance with additional aspects. Method 900, at 902, can monitor execution of an element of industrial code, as described herein (*e.g.,* at a bit or counter allocated in memory for the element). Additionally, at 904, method 900 can store an execution state of the element of industrial code. Furthermore, at 906, method 900 can facilitate input related to a physical response. For example, if the element of industrial code is designed to drive a particular output of a device (*e.g.,* engage a motor, turn on a pump, drive a refrigerator at a particular current level or temperature, and so on) upon proper execution of such code, memory can be allocated to store a result of such output, and a user and/or external device (*e.g.,* industrial sensor, or the like) can be prompted to provide an indication of the result. At 908, input related to the physical response can be received, and at 910, the input can be stored (*e.g.,* in memory allocated to results of physical output connected with the element of industrial code).

In addition to the foregoing, at 912, the stored input can be associated with the stored execution state of the element of industrial code (*e.g.,* provided at reference number 904). As a result, method 900 can determine whether an element of industrial code has executed properly, as well as facilitate feedback indicating whether an appropriate output was generated as a result of proper execution. Furthermore, these results can be correlated to provide an overall validation state related to the industrial code. Furthermore, any changes to the code can trigger a system alarm, or the like, indicating that the industrial code is no longer fully validated. Consequently, method 900 can provide a means for electronically identifying and storing an execution state of industrial code, receiving and storing a result of a related physical output, and providing an indication of any change in validation state. Such a method can provide a significant reduction in time required to validate execution and output of industrial code as compared with conventional techniques.

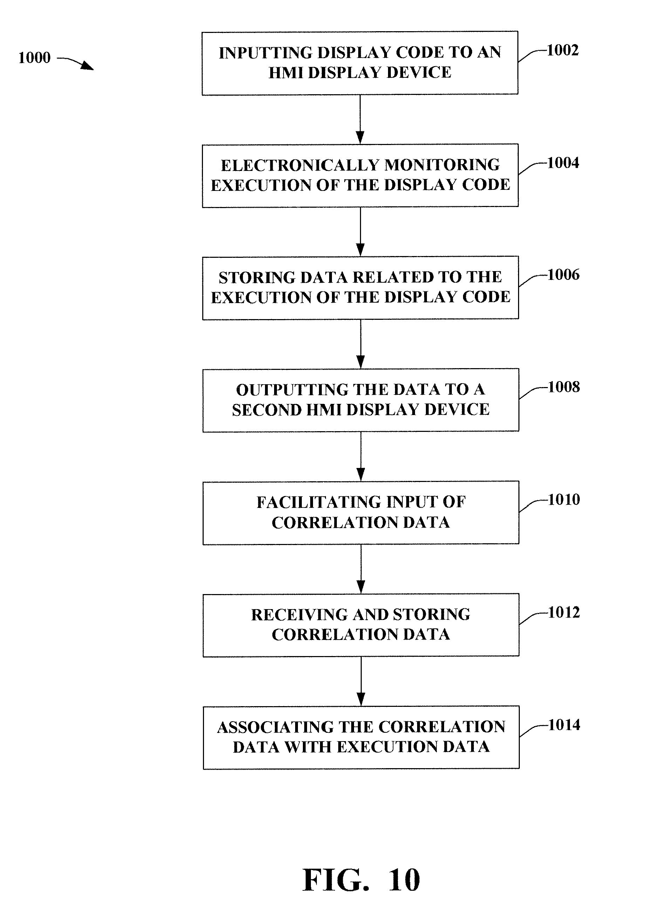

Referring now to FIG. 10, a flowchart 1000 is depicted for electronically validating programmatic code for an HMI display device in accordance with one or more aspects. Method 1000, at 1002, can input display code to an HMI display device. The display code can, for instance, provide a graphical representation of an execution state of one or more logical elements of industrial code. Furthermore, the display code can also provide a graphical representation of device outputs driven by such code, as well as a validation state of such outputs, as described herein or known in the art.

At 1004, method 1000 can electronically monitor execution of the display code at the HMI device. Such monitoring can be substantially similar to that performed with respect to an industrial control and/or industrial emulation device as described herein. At 1006, data related to the execution of the display code can be stored. At 1008, the data can be output to a second HMI display device. Such output can provide a visual and/or auditory representation of execution state of the display code.

At 1010, input of correlation data can be facilitated. Correlation data can include, for instance, observation of the second HMI device and whether an appropriate result was indicated at such device when the display code was executed. As a particular example, a logical element of display code can require an on/off status of an industrial motor be displayed at an HMI device. If observation indicates that the second HMI device properly displays the on/off state when the logical element of display code is executed, then the correlation data can indicate this result. If the second HMI device fails to properly display the on/off status, then the correlation data can specify such a result as well. In addition, input of the correlation data can be facilitate by allocating memory to storing such data, and prompting an observation entity (*e.g.,* industrial technician, optical sensor, electronic gauge, and so on) to provide the data.

At 1012, method 1000 can receive and store the correlation data (*e.g.,* as a result of a prompt to an observation entity). At 1014, the correlation data can be associated with the execution data. Consequently, method 1000 can provide real-time validation and of an execution state of industrial display code and, and results of such display code at an HMI display device. Method 1000, therefore, can be utilized to calibrate accuracy of an industrial display code validation device, such as an HMI display. Additionally, such calibration can be performed automatically as the industrial display code executes, providing a vast improvement of conventional, manual techniques for validation.

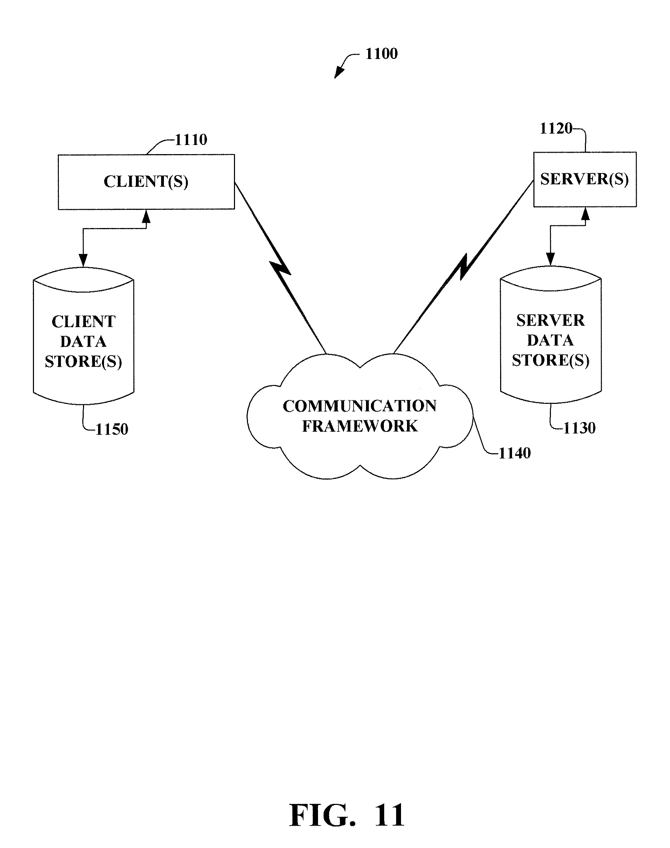

FIG. 11 is a schematic block diagram of a sample-computing environment 1100 with which the subject invention can interact. The system 1100 includes one or more client(s) 1110. The client(s) 1110 can be hardware and/or software (e.g., threads, processes, computing devices). The system 1100 also includes one or more server(s) 1130. The server(s) 1130 can also be hardware and/or software (e.g., threads, processes, computing devices). The servers 1130 can house threads to perform transformations by employing the subject invention, for example. One possible communication between a client 1110 and a server 1130 can be in the form of a data packet adapted to be transmitted between two or more computer processes. The system 1100 includes a communication framework 1150 that can be employed to facilitate communications between the client(s) 1110 and the server(s) 1130. The client(s) 1110 are operably connected to one or more client data store(s) 1160 that can be employed to store information local to the client(s) 1110. Similarly, the server(s) 1130 are operably connected to one or more server data store(s) 1140 that can be employed to store information local to the servers 1130.

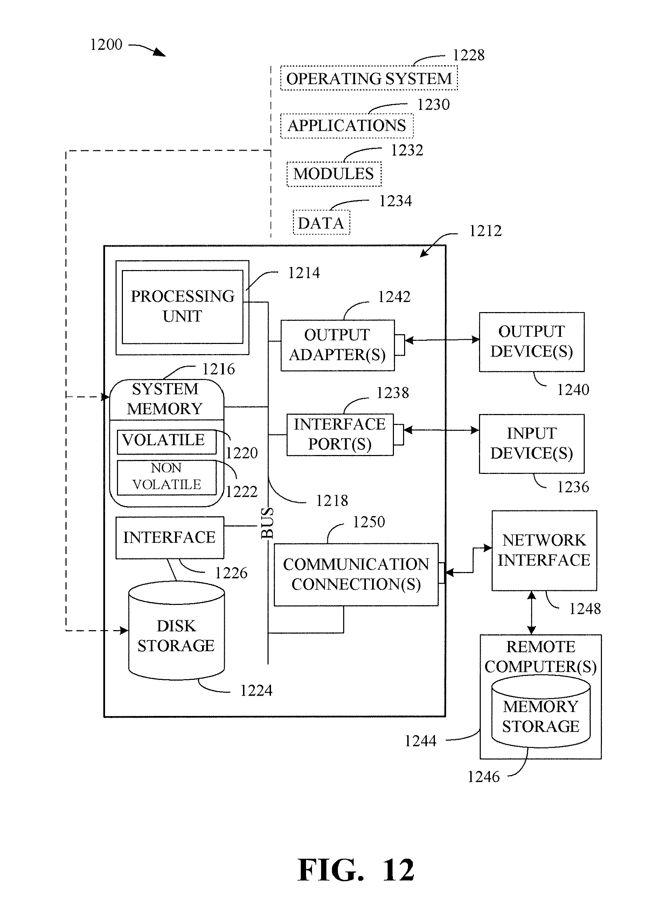

FIG. 12 illustrates an example operating environment that can implement various processes and communications in conjunction with securing communication with an automation control network as disclosed herein. Computer 1212 includes a processing unit 1214, a system memory 1216, and a system bus 1218. The system bus 1218 can couple system components including, but not limited to, the system memory 1216 to the processing unit 1214. The processing unit 1214 can be any of various available processors. Dual microprocessors and other multiprocessor architectures also can be employed as the processing unit 1214.

The system bus 1218 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1216 includes volatile memory 1220 and nonvolatile memory 1222. The basic input/output system (BIOS), containing the basic routines to transfer information between elements within the computer 1212, such as during start-up, is stored in nonvolatile memory 1222. By way of illustration, and not limitation, nonvolatile memory 1222 can include read only memory (ROM), programmable ROM (PROM), electrically programmable ROM (EPROM), electrically erasable PROM (EEPROM), or flash memory. Volatile memory 1220 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1212 also includes removable/non-removable, volatile/nonvolatile computer storage media, for example disk storage 1224. Disk storage 1224 includes, but is not limited to, devices like a magnetic disk drive, floppy disk drive, tape drive, Jaz drive, Zip drive, LS-100 drive, flash memory card, or memory stick. In addition, disk storage 1224 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1224 to the system bus 1218, a removable or non-removable interface is typically used such as interface 1226.

It is to be appreciated that Fig. 12 describes software that acts as an intermediary between users and the basic computer resources described in suitable operating environment 1210. Such software includes an operating system 1228. Operating system 1228, which can be stored on disk storage 1224, acts to control and allocate resources of the computer system 1212. System applications 1230 take advantage of the management of resources by operating system 1228 through program modules 1232 and program data 1234 stored either in system memory 1216 or on disk storage 1224. It is to be appreciated that the subject invention can be implemented with various operating systems or combinations of operating systems.

A user enters commands or information into the computer 1212 through input device(s) 1236. Input devices 1236 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1214 through the system bus 1218 *via* interface port(s) 1238. Interface port(s) 1238 include, for example, a serial port, a parallel port, a game port, and a universal serial bus (USB). Output device(s) 1240 use some of the same type of ports as input device(s) 1236. Thus, for example, a USB port may be used to provide input to computer 1212, and to provide output information from computer 1212 to an output device 1240. Output adapter 1242 is provided to illustrate that there are some output devices 1240 like monitors, speakers, and printers, among other output devices 1240, which require special adapters. The output adapters 1242 include, by way of illustration and not limitation, video and sound cards that provide a means of connection between the output device 1240 and the system bus 1218. It should be noted that other devices and/or systems of devices provide both input and output capabilities such as remote computer(s) 1244.

Computer 1212 can operate in a networked environment using logical connections to one or more remote computers, such as remote computer(s) 1244. The remote computer(s) 1244 can be a personal computer, a server, a router, a network PC, a workstation, a microprocessor based appliance, a peer device or other common network node and the like, and typically includes many or all of the elements described relative to computer 1212. For purposes of brevity, only a memory storage device 1246 is illustrated with remote computer(s) 1244. Remote computer(s) 1244 is logically connected to computer 1212 through a network interface 1248 and then physically connected *via* communication connection 1250. Network interface 1248 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1250 refers to the hardware/software employed to connect the network interface 1248 to the bus 1218. While communication connection 1250 is shown for illustrative clarity inside computer 1212, it can also be external to computer 1212. The hardware/software necessary for connection to the network interface 1248 includes, for exemplary purposes only, internal and external technologies such as, modems including regular telephone grade modems, cable modems and DSL modems, ISDN adapters, and Ethernet cards.

What has been described above includes examples of the claimed subject matter. It is, of course, not possible to describe every conceivable combination of components or methodologies for purposes of describing the claimed subject matter, but one of ordinary skill in the art may recognize that many further combinations and permutations are possible. Accordingly, the claimed subject matter is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

### List of Embodiments:

1. A system that automates verification of code execution in an industrial control environment, comprising:
   a monitoring component that tracks execution of a logical element of programmatic code input into an industrial control or control emulation device; and
   a storage component that allocates memory to the programmatic code, and receives a result of the execution of the logical element from the monitoring component and stores the result in a portion of the allocated memory.
2. The system of embodiment 1, comprising a user interface component that receives data related to validation of an output of the industrial control or the control emulation device as a result of execution of the logical element of programmatic code.
3. The system of embodiment 2, the data indicates at least whether the output was as intended by the logical element, ID information of a validating entity, date and time of the output or validation, or combinations thereof.
4. The system of embodiment 3, the ID information of the validating entity identifies a technician, electro-optical sensor, or electronic vision system, or a combination thereof, that verifies whether the output was as intended by the logical element.
5. The system of embodiment 1, comprising a reset component that modifies or erases the stored result of the execution of the logical element.
6. The system of embodiment 5, the reset component modifies or erases all stored results within the storage component related to execution of logical elements of the programmatic code.
7. The system of embodiment 4, the reset component modifies or erases a selected result based on a change within at least a portion of the programmatic code, wherein execution of such portion provides the selected result.
8. The system of embodiment 1, comprising a summarization component that receives results of execution of a plurality of logical elements of the programmatic code, and identifies and generates statistics related to a percentage of the plurality of logical elements that executed properly or did not execute properly.
9. The system of embodiment 5, comprising a sorting component that filters the identified logical elements that executed properly or did not execute properly and provides one or more of the logical elements based on a search criteria.
10. The system of embodiment 1, the storage component records the result in a bit that indicates whether the logical element has or has not executed properly, or a plurality of bits that indicate a number of times that the logical element has or has not executed properly.
11. The system of embodiment 1, the logical element of programmatic code is a rung of a ladder diagram, block of a function block diagram, a step in a sequential function chart, or a line of structured text or a line of an instruction list, or a combination thereof.
12. The system of embodiment 1, comprising:
   an alarm component that provides the result of the execution of the logical element to a display if the logical element fails to execute; and
   a device display component that provides a graphical or auditory indication that the logical element failed to execute.
13. The system of embodiment 9, the device display component comprises an indicator at the industrial control or the emulation control device, or at a personal computer, a personal digital assistant, a cell phone, or a server, or a combination thereof, communicatively coupled with the industrial control or the emulation control device.
14. The system of embodiment 1, comprising an HMI device or program workstation that receives the stored result and generates a graphical indication of the result of the execution of the logical element.
15. The system of embodiment 14, the HMI device or program workstation provides a steady-state display associated with execution of a plurality of logical elements, and indicates at least one of a number of the logical elements that have executed properly or a number of logical elements that have failed to execute properly, or a line, rung, block, or step number, or a combination thereof, of a logical element that has executed or that has failed to execute.
16. The system of embodiment 1, comprising an output component that generates a report of the result of the execution of the logical element.
17. A method for monitoring execution of programmatic instructions in an industrial control environment, comprising:
   monitoring execution of a logical element input to an industrial control or control emulation device; and
   storing an execution state of the logical element in memory.
18. The method of embodiment 17, comprising outputting or indicating, or both, the stored execution state.
19. The method of embodiment 18, outputting the execution state comprises providing the execution state to a human machine interface (HMI) device or a program workstation external to the industrial control.
20. The method of embodiment 17, indicating the execution state comprises displaying the execution state on a display panel of the industrial control.
21. The method of embodiment 17, wherein monitoring is performed by employing a code coverage process that communicates with the industrial control or the control emulation device to determine whether the logical element is read, comprehended, and executed.
22. The method of embodiment 17, wherein the execution state indicates whether the logical element was executed properly or failed to execute properly, and is stored in a portion of the memory allocated to information associated with the logical element.
23. The method of embodiment 22, the execution state also indicates a number of times that the logical element was executed or not executed.
24. The method of embodiment 17, the memory is located at the industrial control, a program module, a wired or wireless network device, an HMI device, or a program workstation, or a combination thereof.
25. The method of embodiment 17, comprising:
   facilitating user input of information related to a physical response of the industrial control or the control emulation device related to the logical element;
   receiving user input related to the physical response;
   storing the user input in the memory; and
   associating the stored user input with the stored execution state.
26. The method of embodiment 22, the user input indicates whether the physical response is an intended result of the logical element as executed by the industrial control or the control emulation device.
27. The method of embodiment 17, comprising storing time and date information associated with the execution of the logical element.
28. A system that monitors and validates execution of programmatic instructions for graphical display of an industrial HMI device, comprising:
   means for electronically monitoring execution of programmatic instructions associated with graphical display of an industrial HMI device or program workstation;
   means for storing information related to proper execution of the programmatic instructions; and
   means for output of the stored information to a second HMI device or second program workstation.
29. The system of embodiment 28, the industrial HMI device or program workstation can display real time state of execution of programmatic code on an industrial control or control emulation device.
30. The system of embodiment 28, comprising means for input of correlation information that indicates whether execution of programmatic code on the HMI device or program workstation, display of an industrial control process on the HMI device or program workstation, and operation of the industrial control process are synchronized, and where the means for input can further receive the correlation information and id information associated with a validating entity.

## Claims

1. A system that automates verification of code execution in an industrial control environment, comprising:
a monitoring component that tracks execution of a logical element of programmatic code input into an industrial control or control emulation device; and
a storage component that allocates memory to the programmatic code, and
receives a result of the execution of the logical element from the monitoring component and stores the result in a portion of the allocated memory.

2. The system of claim 1, further comprising at least one of:
a user interface component that receives data related to validation of an output of the industrial control or the control emulation device as a result of execution of the logical element of programmatic code;
a reset component that modifies or erases the stored result of the execution of the logical element;
a summarization component that receives results of execution of a plurality of logical elements of the programmatic code, and identifies and generates statistics related to a percentage of the plurality of logical elements that executed properly or did not execute properly;
a sorting component that filters the identified logical elements that executed properly or did not execute properly and provides one or more of the logical elements based on a search criteria;
an alarm component that provides the result of the execution of the logical element to a display if the logical element fails to execute, and a device display component that provides a graphical or auditory indication that the logical element failed to execute;
an HMI device or program workstation that receives the stored result and
generates a graphical indication of the result of the execution of the logical element; an output component that generates a report of the result of the execution of the logical element.

3. The system of claim 2, wherein the data received by the user interface component indicates at least whether the output was as intended by the logical element, ID information of a validating entity, date and time of the output or validation, or combinations thereof.

4. The system of claim 3, wherein the ID information of the validating entity identifies a technician, electro-optical sensor, or electronic vision system, or a combination thereof, that verifies whether the output was as intended by the logical element.

5. The system of claim 2, wherein the reset component modifies or erases all stored results within the storage component related to execution of logical elements of the programmatic code; or the reset component modifies or erases a selected result based on a change within at least a portion of the programmatic code, wherein execution of such portion provides the selected result.

6. The system of any one of claims 1 to 5, wherein the storage component records the result in a bit that indicates whether the logical element has or has not executed properly, or a plurality of bits that indicate a number of times that the logical element has or has not executed properly; and/or the logical element of programmatic code is a rung of a ladder diagram, block of a function block diagram, a step in a sequential function chart, or a line of structured text or a line of an instruction list, or a combination thereof.

7. The system of claim 5, wherein the device display component comprises an indicator at the industrial control or the emulation control device, or at a personal computer, a personal digital assistant, a cell phone, or a server, or a combination thereof, communicatively coupled with the industrial control or the emulation control device.

8. The system of claim 2, wherein the HMI device or program workstation provides a steady-state display associated with execution of a plurality of logical elements, and indicates at least one of a number of the logical elements that have executed properly or a number of logical elements that have failed to execute properly, or a line, rung, block, or step number, or a combination thereof, of a logical element that has executed or that has failed to execute.

9. A method for monitoring execution of programmatic instructions in an industrial control environment, comprising:
monitoring execution of a logical element input to an industrial control or control emulation device; and
storing an execution state of the logical element in memory.

10. The method of claim 9, further comprising at least one of:
outputting or indicating, or both, the stored execution state;
facilitating user input of information related to a physical response of the industrial control or the control emulation device related to the logical element, receiving user input related to the physical response, storing the user input in the memory, and associating the stored user input with the stored execution state;
storing time and date information associated with the execution of the logical element.

11. The method of claim 10, wherein outputting the execution state comprises providing the execution state to a human machine interface, HMI, device or a program workstation external to the industrial control.

12. The method of any one of claims 9 to 11, wherein indicating the execution state comprises displaying the execution state on a display panel of the industrial control; and/or
wherein monitoring is performed by employing a code coverage process that communicates with the industrial control or the control emulation device to determine whether the logical element is read, comprehended, and executed; and/or
wherein the execution state indicates whether the logical element was executed properly or failed to execute properly, and is stored in a portion of the memory allocated to information associated with the logical element; and/or
wherein the memory is located at the industrial control, a program module, a wired or wireless network device, an HMI device, or a program workstation, or a combination thereof.

13. The method of claim 12, the execution state also indicates a number of times that the logical element was executed or not executed; and/or the user input indicates whether the physical response is an intended result of the logical element as executed by the industrial control or the control emulation device.

14. A system that monitors and validates execution of programmatic instructions for graphical display of an industrial HMI device, comprising:
means for electronically monitoring execution of programmatic instructions associated with graphical display of an industrial HMI device or program workstation; means for storing information related to proper execution of the programmatic instructions; and
means for output of the stored information to a second HMI device or second program workstation.

15. The system of claim 14, the industrial HMI device or program workstation can display real time state of execution of programmatic code on an industrial control or control emulation device; and/or system further comprising means for input of correlation information that indicates whether execution of programmatic code on the HMI device or program workstation, display of an industrial control process on the HMI device or program workstation, and operation of the industrial control process are synchronized, and where the means for input can further receive the correlation information and id information associated with a validating entity.
